# EUROPÄISCHE PATENTSCHRIFT

(11) **EP 0 748 729 B1**
(45) Veröffentlichungstag und Bekanntmachung des Hinweises auf die Patenterteilung: **28.04.1999**
(21) Anmeldenummer: 96109138.6
(22) Anmeldetag: 07.06.1996
(51) Int. Cl.: B60S 3/04

(54) **Fahrzeugwaschanlage**
Vehicle washing installation
Installation de lavage de voitures

(30) Priorität: 16.06.1995 DE 29509750 U
(43) Veröffentlichungstag der Anmeldung: 18.12.1996
(73) Patentinhaber: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Liebau, Gerhard, Dipl.-Ing.

(56) Entgegenhaltungen:
- DE-C- 3 241 559
- DE-C- 3 812 476
- DE-U- 8 804 404
- DE-U-29 507 019

## Beschreibung

Die Erfindung betrifft eine Fahrzeugwaschanlege, mit mindestens einer zur Bewegung der Fahrzeuge durch die Anlage vorgesehenen, endlosen Förderkette, mit mehreren entlang der Bewegungsbahn des Fahrzeuges angeordneten Behandlungsaggregaten zum Waschen und/oder Trocknen des Fahrzeuges, von denen mindestens eines in einer streckenweise synchron mit dem Fahrzeug vorwärts bewegbaren und mittels einer Rückstelleinrichtung in ihre Ausgangsposition zurückbewegbaren Halterung gelagert ist, und mit einer Kupplungseinrichtung, mit der die Halterung zur Vorwärtsbewegung mechanisch an die Förderkette ankuppelbar und hierdurch synchron mit dieser bewegbar ist.

Bei dem Betrieb derartiger Fahrzeugwaschanlagen, die allgemein als Waschstraßen bezeichnet werden, ist es erforderlich, einzelne Behandlungsaggregate synchron mit dem Fahrzeug mitzubewegen, während das Fahrzeug mittels der Fördereinrichtung durch die Fahrzeugwaschanlage geschleppt wird. Dies ist z. B. der Fall bei einem Radwäscher, der während des Waschens eines Fahrzeugrades synchron mit dem Fahrzeugrad in Bewegungsrichtung des Fahrzeuges vorwärtsbewegt wird, bis das betreffende Rad gewaschen ist, und dann mittels der Rückstelleinrichtung wieder in seine Ausgangsstellung zurückbewegt wird, um das Hinterrad des betreffenden Fahrzeuges in gleicher Weise zu waschen. Auch vertikale oder horizontale Waschbürsten müssen während des Waschens der Frontpartie und des Hecks mit dem Fahrzeug mitbewegt werden, wenn man ein einwandfreies Waschergebnis sicherstellen und eine Beschädigung des Fahrzeuges vermeiden will. Ähnliches trifft auch für bewegliche Trockendüsen zu. Dieses Mitbewegen der Behandlungsaggregate ist um so wichtiger, je höher die Fördergeschwindigkeit der Fördereinrichtung ist. In dem Bestreben, die Waschkapazität einer Fahrzeugwaschanlage zu erhöhen, versucht man, die Fördergeschwindigkeit zu steigern. Hierbei ergeben sich jedoch Probleme bei der Synchronisation der Bewegung der Waschaggregate mit der Bewegung des Fahrzeuges, die von der Fördergeschwindigkeit der Fördereinrichtung bestimmt wird. Wenn nämlich die Bewegungsgeschwindigkeit des Behandlungsaggregates in Bewegungsrichtung des Fahrzeuges nicht mit der Geschwindigkeit desselben übereinstimmt, dann werden die Waschbürsten z. B. an der Front des Fahrzeuges vor allem in den Außenbereichen zu stark angedrückt bzw. haben sie bei der Heckwäsche nicht genügend Kontakt mit dem Fahrzeug. Ersteres kann zu Beschädigungen des Lackes führen und letzteres beeinträchtigt das Waschergebnis. Ähnliches gilt für Trockendüsen, deren Trockenergebnis besonders an der Front und am Heck des Fahrzeuges beeinträchtigt wird, wenn diese nicht in konstantem Abstand gegenüber der Fahrzeugoberfläche bewegt werden.

Bei einer bekannten Fahrzeugwaschanlage der eingangs erwähnten Art (DE-C-38 12 476), die zum Reinigen der Räder von Fahrzeugen dient, ist auf jeder Seite des Fahrzeuges ein parallel zu dessen Bewegungsrichtung frei beweglicher Schlitten als Halterung für die zugeordnete Reinigungsvorrichtung vorgesehen. Als Kupplungseinrichtung zwischen der Förderkette und dem Schlitten ist ein in die Förderkette eingreifendes Kettenrad vorgesehen, welches über eine einund ausrückbare Kupplung mit einer Welle kuppelbar ist, die ein Antriebsrad trägt. Über dieses Antriebsrad und ein weiteres, frei drehbares Umlenkrad ist ein endloser Zahnriemen geführt, der mittels einer Klemmvorrichtung an den die Wascheinrichtung tragenden Schlitten angeklemmt ist. Beim Durchschieben eines Fahrzeuges durch die Waschanlage betätigt das Fahrzeug einen Anfangskontakt, welcher die erwähnte Kupplung einrückt und das Kettenrad mit der Welle verbindet. Hierdurch wird über die Welle und das Antriebsrad der Zahnriemen und damit der Schlitten angetrieben, so daß sich der Schlitten synchron mit dem Fahrzeug bewegt. Beim Vorlauf des Schlittens spannt dieser eine Rückholeinrichtung, und nachdem ein Rad des Fahrzeuges einen Endkontakt betätigt hat, wird die Welle vom Kettenrad abgekuppelt und unter Wirkung der Rückholeinrichtung wird der Schlitten in seine Ausgangsposition zurückbewegt. Die Kupplungseinrichtung, bestehend aus Kettenrad, der eigentlichen Kupplung, Welle, Antriebsrad, Zahnriemen und Umlenkrad, ist jedoch verhältnismäßig aufwendig in der Herstellung.

Der Erfindung liegt daher die Aufgabe zugrunde, eine Fahrzeugwaschanlage der eingangs angegebenen Art zu schaffen, die mit geringem technischen Aufwand herzustellen ist.

Dies wird nach der Erfindung dadurch erreicht, daß die Kupplungseinrichtung an der Halterung vorgesehen ist und daß die Halterung durch direkten Eingriff eines Kupplungsteiles in die Förderkette an diese unmittelbar ankuppelbar ist.

Die neue Fahrzeugwaschanlage zeichnet sich vor allem dadurch aus, daß die Geschwindigkeit der Fördereinrichtung auf rein mechanischem Weg auf die mitzubewegenten Behandlungsaggregate bzw. die diese tragende Halterung übertragen wird und damit bei sehr geringem rechnischem Aufwand 100%ig sichergestellt ist, daß sich die Fürderkette und damit das Fahrzeug und die jeweiligen Wasch- bzw. Trockenaggregate exakt mit der gleichen Geschwindigkeit bewegen. Hierdurch wird das Wasch- bzw. Trockenergebnis insbesondere auch an der Heckpartie verbessert. Auch die Beschädigungsgefahr wird wesentlich verringert. Vor allem ermöglicht die erfindungsgemäße Ausgestaltung auch eine wesentliche Steigerung der Fördergeschwindigkeit, denn dank der Ankupplung der das Behandlungsaggregat tragenden Halterung an die Förderkette ist auch bei hohen Fördergeschwindigkeiten die Synchronbewegung von Behandlungsaggregaten und Fahrzeug sichergestellt.

Durch die Anordnung der Kupplungseinrichtung an der Halterung, z.B. einem Portal, und dem direkten Eingriff eines Kupplungsteiles in die Förderkette, ist die Halterung unmittelbar an die Fürderkette ankuppelbar Hierdurch ist die erfindungsgemäße Fahrzeugwaschanlage mit geringem technischen Aufwand herstellbar.

Vorteilhafte Ausgestaltungen der Erfindung sind in den Unteransprüchen gekennzeichnet.

Die Erfindung ist in folgendem, anhand von mehreren in der Zeichnung dargestellten Ausführungsbeispielen näher erläutert.

Es zeigen:
- Figur 1: die schematische Seitenansicht der Förderkette und eines eine horizontale Waschbürste tragenden Portals,
- Figur 2: die zugehörige Draufsicht in Richtung II der Figur 1,
- Figur 3: einen Querschnitt nach der Linie III-III der Figur 1,
- Figur 4: die Draufsicht auf Förderkette und ein mit zwei vertikalen Waschbürsten ausgerüstetes Portal,
- Figur 5: eine Draufsicht auf die Förderkette und ein mit einer vertikalen Trockendüse ausgerüstetes Portal,
- Figur 6: einen Teilquerschnitt von Förderkette und einem mit horizontaler Trockendüse versehenen Portal,
- Figur 7: ein Arbeitsschema der Fahrzeugwaschanlage.

Bei Fahrzeugwaschanlagen der hier beschriebenen Art, sogenannten Waschstraßen, werden die zu waschenden Fahrzeuge durch eine Fördereinrichtung durch die Anlage bewegt. Diese Fördereinrichtung besteht in der Regel aus zwei zueinander parallelen, endlosen Förderketten 1, 1', zwischen denen in gewissen Abständen Mitnehmerrollen 2 angeordnet sind. Diese Mitnehmerrollen legen sich jeweils von hinten an eines der Räder des zu waschenden Fahrzeuges an und schieben so das Fahrzeug durch die Waschanlage. Es gibt auch Fördereinrichtungen mit nur einer endlosen Förderkette, an der die Mitnehmerrollen dann fliegend angeordnet sind. Da es bei der vorliegenden Erfindung jeweils nur auf eine Förderkette ankommt, wird in folgendem nur auf die in bezug auf das Fahrzeug außenliegende Förderkette 1 Bezug genommen. Die Richtung, in der das zu waschende Fahrzeug mittels der Förderketten 1, 1' bewegt wird, ist mit A bezeichnet.

Entlang der Bewegungsbahn des Fahrzeuges sind mehrere Behandlungsaggregate zum Waschen und Trocknen des Fahrzeuges angeordnet, von denen einige streckenweise synchron mit dem Fahrzeug in dessen Bewegungsrichtung A bewegt werden sollen. Diese beweglichen Behandlungsaggregate sind in der Zeichnung dargestellt und in folgendem beschrieben. Die beweglichen Behandlungsaggregate sind jeweils in einer Halterung angeordnet, die in Bewegungsrichtung A des Fahrzeuges vorwärtsbewegbar und nach Beendigung des Wasch- oder Trocknungsvorganges durch eine nicht dargestellte Rückstelleinrichtung, wie z. B. Gegengewichte, Feder, Pneumatikzylinder usw., wieder in ihre Ausgangsposition zurückbewegbar ist. Unter Halterung wird hier jede Art von Vorrichtung verstanden, die zur Lagerung der betreffenden Behandlungsaggregate geeignet ist, wie z. B. ein Schlitten, ein Portal 4, ein Rahmen, ein Schwenkarm oder dergleichen.

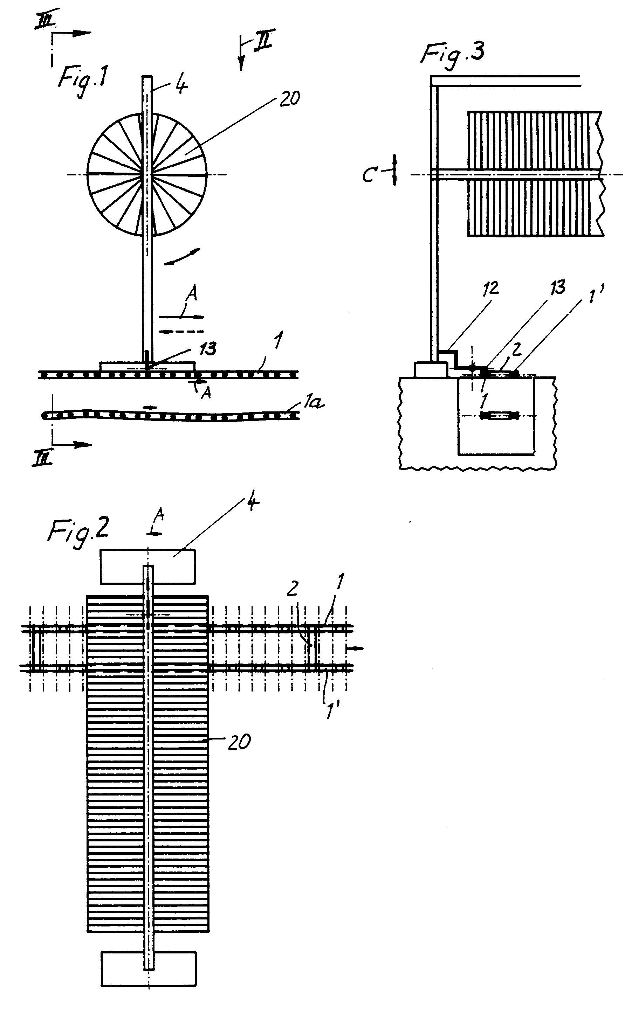

Bei dem in Figur 1 bis 3 dargestellten Ausführungsbeispiel ist an dem Portal 4 ein Mitnehmerarm 12 befestigt, an dessen freien Ende eine Klinke 13 schwenkbar gelagert ist, die von oben in die Förderkette 1 eingreifen kann. Die Klinke 13 bildet Bestandteil einer Kupplungseinrichtung und kann durch einen Elektromagneten oder einen ähnlichen Stellmotor in Eingriff bzw. außer Eingriff mit der Förderkette 1 gebracht werden. Anstelle der Klinke 13 kann jedoch jede andere Kupplungseinrichtung vorgesehen sein, die es ermöglicht, den Mitnehmerarm 12 mit der Förderkette 1 lösbar zu verbinden. An dem Portal 4 ist ferner als Behandlungsaggregat eine um eine horizontale Achse drehbare Waschbürste 20 vorgesehen, die in dem Portal 4 in Richtung C höhenbeweglich ist.

Wenn die Frontpartie des von der Fördereinrichtung in Richtung A bewegten Fahrzeuges das in seiner Ausgangsstellung befindliche Portal 4 erreicht hat und sich die Waschbürste 20 in ihrer untersten Stellung befindet, wird über bekannte Sensoren die Kupplungseinrichtung 13 betätigt und deren Klinke in die Förderkette 1 eingehakt. Hierdurch wird das Portal zusammen mit der Waschbürste 20 synchron mit dem Fahrzeug in Richtung A bewegt und der Abstand der Waschbürste zur Front bleibt zunächst konstant, bis diese durch die nach oben gehende Waschbürste 20 gewaschen ist. Dies ist besonders wichtig bei Fahrzeugen mit hoher Vorderfront, wie z. B. Kleinbussen und dergleichen. Nachdem die Vorderfront gewaschen ist und während dieser Zeit das Portal 4 um eine gewisse Strecke mitbewegt wurde, wird die Kupplungseinrichtung 13 wieder gelöst und das Portal kehrt unter Wirkung der Rückstelleinrichtung entgegen der Pfeilrichtung A in seine Ausgangsstellung zurück, wobei die Oberseite des Fahrzeuges gewaschen wird. Zum Waschen des Hecks kann dann das Portal 4 mittels der Kupplungseinrichtung 13 erneut mit der Förderkette gekuppelt und damit die Waschbürste 20 in konstantem Abstand zu dem sich weiter bewegenden Fahrzeugheck gehalten werden.

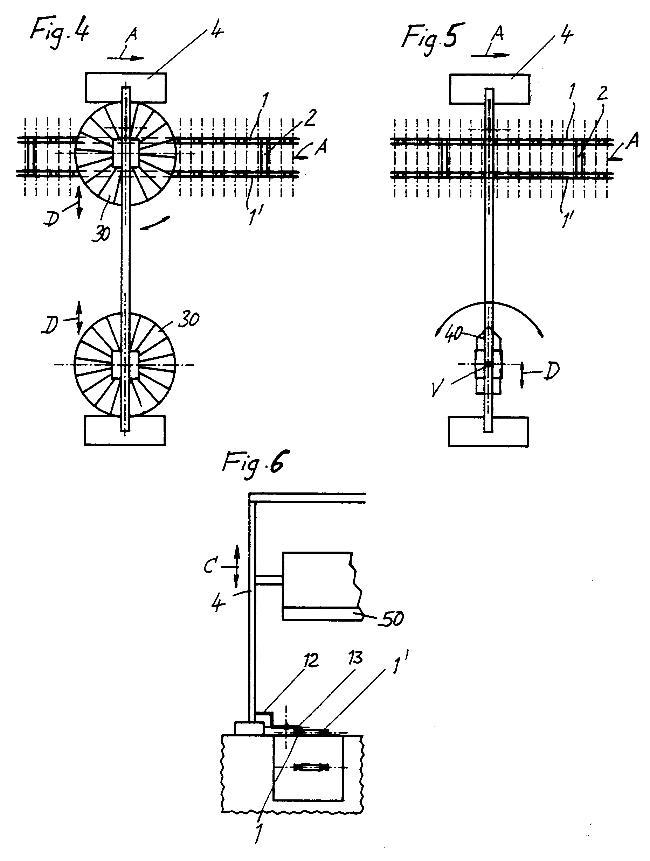

Bei den in den Figuren 4, 5 und 6 bzw. 7 dargestellten Ausführungsbeispielen kann das Portal 4 in der soeben beschriebenen Weise über eine Kupplungseinrichtung mechanisch unmittelbar an die Förderkette angekuppelt und hierdurch synchron mit dieser bewegt werden. Als Behandlungsaggregate sind bei dem in Figur 4 dargestellten Ausführungsbeispiel zwei um vertikale Achsen rotierende Waschbürsten 30 vorgesehen, die an dem Portal horizontal und quer zur Bewegungsrichtung A des Fahrzeuges in Richtung D beweglich sind. Auch dieses Portal 4 kann während des Waschens der Fahrzeugfront und des Fahrzeughecks mit der Förderkette 1 gekuppelt werden, so daß die Waschbürsten 30 jeweils in konstantem Abstand zur Fahrzeugfront bzw. zum Fahrzeugheck gehalten werden.

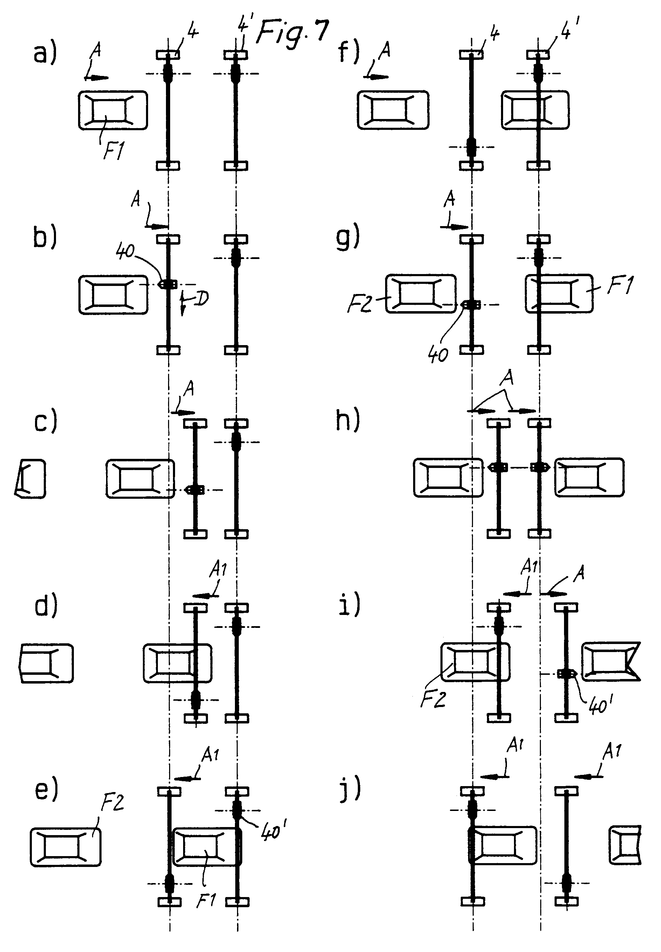

Bei dem in Figur 5 dargestellten Ausführungsbeispiel ist an dem Portal 4 eine vertikale Trockendüse 40 angeordnet, die am Portal 4 in Richtung D verfahrbar und um eine vertikale Achse in beiden Richtungen um jeweils 90° schwenkbar ist. Die Wirkungsweise dieses Trocknungsaggregates wird weiter untenstehend noch anhand der Figur 7 beschrieben.

Figur 6 zeigt ein Portal 4, an dem eine horizontale Trockendüse 50 in Richtung C höhenbeweglich gelagert ist. Auch diese Trockendüse 50 kann ggf. um ihre horizontale Achse schwenkbar sein, damit sie beim Trocknen der Fahrzeugfront bzw. des Fahrzeughecks einen gegen das Fahrzeug gerichteten Luftstrom ausblasen kann.

Bei dem in Figur 7 dargestellten Arbeitsschema sind zwei Portale 4, 4' vorgesehen, die jeweils eine vertikale und schwenkbare Trockendüse 40, 40' entsprechend Figur 8 tragen. Figur 7a zeigt beide Portale 4, 4' in Ausgangsposition. Wenn das Fahrzeug F1 das erste Portal 4 erreicht hat, wird dessen Trockendüse 40 zum Fahrzeug hin geschwenkt und quer zum Fahrzeug in Richtung D bewegt. Gleichzeitig wird das Portal 4 mit der Förderkette 1 gekuppelt und hierdurch synchron mit dem Fahrzeug in Richtung A während des Trocknens der Front vorwärtsbewegt. Hierdurch wird die Trockendüse 40 in gleichbleibendem Abstand zur Front gehalten und ein guter Trockeneffekt erzielt. Wenn gemäß Figur 7c die Trockendüse 40 die andere Fahrzeugseite erreicht hat, wird sie um 90° geschwenkt und das Portal 4 von der Förderkette 1 gelöst. Unter Wirkung der Rückstelleinrichtung kehrt das Portal 4 in Pfeilrichtung A1 in seine Ausgangsstellung zurück und trocknet dabei die rechte Seitenfläche des Fahrzeuges F1. Währenddessen hat das Fahrzeug gemäß Figur 7e das zweite Portal 4' erreicht. Dessen Trockendüse 40' trocknet gemäß Figur 7f und 7g die linke Seitenfläche des Fahrzeuges F1, wobei das Portal 4' zunächst ruht. Mit dem ersten Portal beginnt gemäß Figur 7g gleichzeitig das Trocknen der Front des nachfolgenden Fahrzeuges F2. In der Stellung gemäß Figur 7h wurde die Trocknungsdüse 40' um 90° zum Heck des Fahrzeuges F1 hingeschwenkt und das zweite Portal 4' mit der Förderkette gekuppelt, so daß dieses nun in Richtung A mitbewegt und dabei die Trockendüse 40' in konstantem Abstand vom Fahrzeugheck gehalten wird. Nach dem Trocknen des Fahrzeughecks wird das zweite Portal 4' wieder von der Förderkette gelöst und kehrt in Pfeilrichtung A1 gemäß Figur 7j wieder in seine Ausgangsposition zurück.

Gegebenenfalls wäre es auch denkbar, zwei schwenkbare Trockendüsen an einem gemeinsamen Portal anzuordnen und dann ausgehend von einer Ausgangsstellung, in welcher beide Trockendüsen sich in der Mitte der Fahrzeugbewegungsbahn befinden und gegen die Fahrzeugfront gerichtet sind, nacheinander zunächst die Fahrzeugfront, dann beide Fahrzeugseiten gleichzeitig und schließlich das Fahrzeugheck zu trocknen. Hierbei wird jedoch der Trockeneffekt etwas beeinträchtigt, wenn beide Trockendüsen einander genähert sind und sich deren Luftströme miteinander verwirbeln.

Da das Trocknungsergebnis in Waschstraßen erfahrungsgemäß besonders im Bereich der Stoßstangen zu wünschen übrig läßt, ist es denkbar, daß in bestehende Waschstraßen- und Trocknungsanlagen ein zusätzliches Portal mit einer vertikalen Düse entsprechend Fig. 5, eingebaut wird, wobei die Düse lediglich zur Trocknung des Front- und Heckbereiches verwendet wird. Dabei würde diese Düse mitlaufand den Frontbereich trocknen, anschließend um 180° schwenken und mitlaufend das Heck des Fahrzeugs trocknen, sobald dieses in den Bereich der Düse kommt. Dabei würde die Geschwindigkeit der Querbewegung der Düse bzw. der Rückholung des Aggregates so ausgestaltet, daß die Düse nach einer weiteren 180°-Schwenkung bereits wieder den Frontbereich des nachfolgenden Fahrzeuges mitfahrend trocknen kann.

## Patentansprüche

1. Fahrzeugwaschanlage, mit mindestens einer zur Bewegung der Fahrzeuge (F1, F2) durch die Anlage vorgesehenen, endlosen Fürderkette (1), mit mehreren entlang der Bewegungsbahn des Fahrzeuges angeordneten Behandlungsaggregaten zum Waschen und/oder Trocknen des Fahrzeuges, von denen mindestens eines in einer streckenweise synchron mit dem Fahrzeug vorwärts bewegbaren und mittels einer Rückstelleinrichtung in ihre Ausgangsposition zurückbewegbaren Halterung (4, 4') gelagert ist, und mit einer Kupplungseinrichtung (13), mit der die Halterung (4, 4') zur Vorwärtsbewegung mechanisch an die Förderkette (1) ankuppelbar und hierdurch synchron mit dieser bewegbar ist, **dadurch gekennzeichnet,** daß die Kupplungseinrichtung (13) an der Halterung (4, 4') vorgesehen ist und daß die Halterung durch direkten Eingriff eines Kupplungsteiles (13) in die Förderkette (1) an diese unmittelbar ankuppelbar ist.

2. Fahrzeugwaschanlage nach Anspruch 1, **dadurch gekennzeichnet,** daß das Kupplungsteil eine Klinke (13) ist, die mit der Halterung derart schwenkbar verbunden ist, daß sie von oben in die Förderkette eingreifen kann.

3. Fahrzeugwaschanlage nach Anspruch 2, **dadurch gekennzeichnet,** daß die Klinke an einem an der Halterung (4, 4') befestigten Mitnehmerarm (12) schwenkbar gelagert ist.

4. Fahrzeugwaschanlage nach Anspruch 2 oder 3, **dadurch gekennzeichnet,** daß die Klinke (13) mittels eines Elektromagneten oder einem ähnlichen Stellmotor in Eingriff bzw. außer Eingriff mit der Förderkette bringbar ist.

5. Fahrzeugwaschanlage nach einem der Ansprüche 1 bis 4, **dadurch gekennzeichnet,** daß die Halterung ein Portal (4, 4') ist.

6. Fahrzeugwaschanlage nach Anspruch 5, **dadurch gekennzeichnet,** daß das Behandlungsaggregat (30, 40) in dem Portal (4, 4') quer zu der Fahrzeugbewegungsrichtung (A) beweglich gelagert ist.

## Claims

1. Vehicle washing plant with at least one endless conveyor chain (1) for moving the vehicles (F1, F2) through the plant, with a plurality of treatment units disposed along the path of movement of the vehicle for washing and/or drying the vehicle, of which at least one is mounted in a holding system (4, 4') movable forwards in sections synchronously with the vehicle and returnable by means of a return device into its initial position, and with a coupling device (13), by means of which the holding system (4, 4') for forward movement may be mechanically coupled to the conveyor chain (1) and thus is movable synchronously therewith, characterised in that the coupling device (13) is provided on the holding system (4, 4'), and in that the holding system may be directly coupled to the conveyor chain (1) by direct engagement of a coupling portion (13) in the said conveyor chain (1).

2. Vehicle washing plant according to claim 1, characterized in that the coupling portion is a latch (13) which is pivotally connected to the holding system in such a way that it can engage from above in the conveyor chain.

3. Vehicle washing plant according to claim 2, characterized in that the latch is pivotally mounted on a drive am (12) secured on the holding system (4, 4').

4. Vehicle washing plant according to claim 2 or 3, characterised in that the latch (13) may be brought out of engagement with the conveyor chain by means of an electromagnet or a similar servo motor.

5. Vehicle washing plant according to one of claims 1 to 4, characterised in that the holding system is a gantry (4, 4').

6. Vehicle washing plant according to claim 5, characterised in that the treatment unit (30, 40) is mounted in the gantry (4, 4') so as to move transversely to the direction of movement of the vehicle (A).

## Revendications

1. Installation de lavage de véhicules, comprenant au moins une chaîne transporteuse (1) sans fin, prévue pour le déplacement des véhicules (F1, F2) à travers l'installation, plusieurs appareils de traitement, disposés le long du trajet de mouvement du véhicule, pour laver et/ou sécher le véhicule, dont au moins un appareil est monté dans un support (4, 4') et déplaçable en avant sur une certaine distance en synchronisme avec le véhicule et peut être ramené au moyen d'un dispositif de rappel à sa position initiale, ainsi qu'un dispositif d'accouplement (13) par lequel le support (4, 4') est accouplable mécaniquement à la chaîne transporteuse (1) et peut ainsi être déplacé en synchronisme avec celle-ci, **caractérisée en ce** que le dispositif d'accouplement (13) est prévu sur le support (4, 4') et que le support est directement accouplable à la chaîne transporteuse (1) par engagement direct d'une pièce d'accouplement (13) dans la chaîne.

2. Installation de lavage de véhicules selon la revendication 1, caractérisée en ce que la pièce d'accouplement est un cliquet (13) qui est relié au support de manière à pouvoir basculer pour s'engager d'en haut dans la chaîne transporteuse.

3. Installation de lavage de véhicules selon la revendication 2, caractérisée en ce que le cliquet est monté basculant sur un bras d'entraînement (12) fixé au support (4, 4').

4. Installation de lavage de véhicules selon la revendication 2 ou 3, caractérisée en ce que le cliquet (13) peut être engagé dans la chaîne transporteuse ou dégagé de celle-ci au moyen d'un électroaimant ou d'un servomoteur analogue.

5. Installation de lavage de véhicules selon une des revendications 1 à 4, caractérisée en ce que le support est un portique (4, 4').

6. Installation de lavage de véhicules selon la revendication 5, caractérisée en ce que l'appareil de traitement (30, 40) est monté mobile, transversalement à la direction de mouvement des véhicules (A), dans le portique (4, 4').
